# EUROPEAN PATENT APPLICATION

(11) **EP 3 819 498 A1**
(43) Date of publication of application: **12.05.2021**
(21) Application number: 19386045.9
(22) Date of filing: 05.11.2019
(51) Int. Cl.: F03G 7/10

(54) **ROTATIONAL MECHANICAL ENERGY GENERATION SET**

(71) Applicant: Karramanoukian, Haroutoun, Yerevan (AR)
(72) Inventor: Karramanoukian, Haroutoun, Yerevan (AR)
(74) Representative: Argyriadis, Korinna

(57) **Abstract**

Mechanical set composed of a main pivot with pulleys on its two edges fixed on the machine's base and in the middle of the main pivot a large metallic plate is fixed, and also on the two edges of the large plate, metallic plates of smaller diameters are fixed, two on its right edge and another two on its left edge where these plates are connected with each other to become one single body and main and secondary arms along with their accessories are fixed on them.

## Description

This invention is a mechanical set composed of a main pivot with pulleys on its two edges fixed on the machine's base and in the middle of the main pivot a large metallic plate is fixed as shown in Figure (1), and also on the two edges of the large plate, metallic plates of smaller diameters are fixed, two on its right edge and another two on its left edge where these plates are connected with each other to become one single body and the main and secondary arms along with their accessories are fixed on them.

With this machine/ invention and its front force, we are capable of lifting dozens nay thousands of tons of weights against acceleration due to gravity per second as well as of making use of it to start up the machine/ invention thus, to generate mechanical rotational energy and consequently, to convert this energy to a clean electrical energy.

### Technical state of the invention

The invention has two powerful operative forces:
- The first force is the main arms (6): it is the main force that generates the rotational force, which is required to produce energy.
- The second force: is the front force of the centers of gravity of the secondary arms. It is a very powerful force of which we can benefit as a power to open and close the main arms (6). It constitutes a powerful front on the bottom right of the machine during its rotation (of the machine) as well as it produces a significant increase in the moment of the force generated by the machine due to the creation of a vacuum for the centers of gravity of the secondary arms on the top left of the machine. Thus, multiplying the force on the bottom right of the machine and making a vacuum for the centers of gravity on the top left of the machine which will generate an enormous force which can be used to open the main arm (6) on the top of the machine and to close the main arm (6) on the bottom of the machine during the rotation of the machine. In such case, we would have benefited from the two-thirds of the front force, while the remaining one third of the front force will be sufficient to start up the centers of gravity of the secondary arms.

As it is clearly shown in Figure (2) clarifying that the main power of the machine/ invention is in the main arms (6) and that the rotational moment resulting from loading the main arms with the weights (7) remains constant and does not decrease at all during the starting up of the machine/ invention.

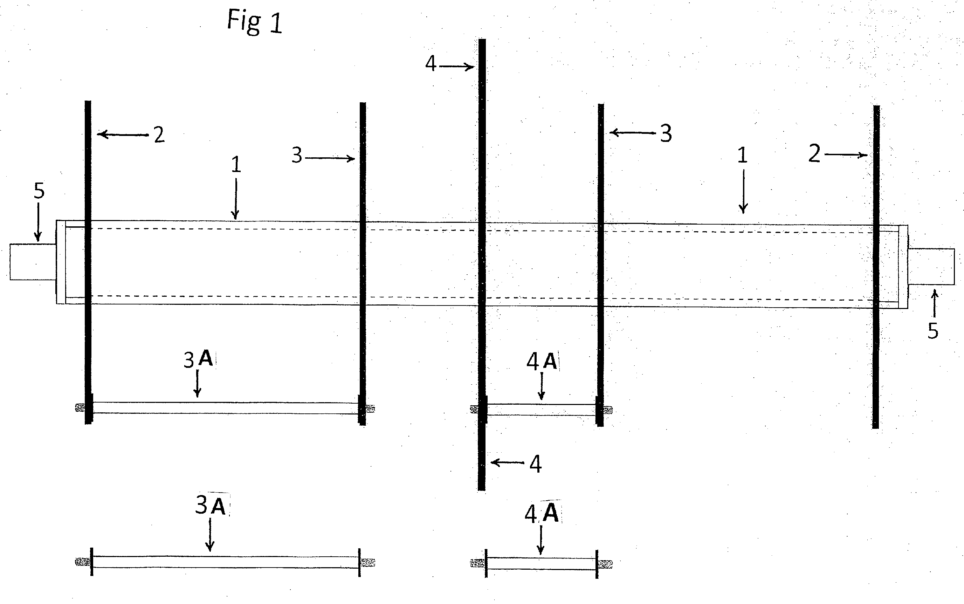

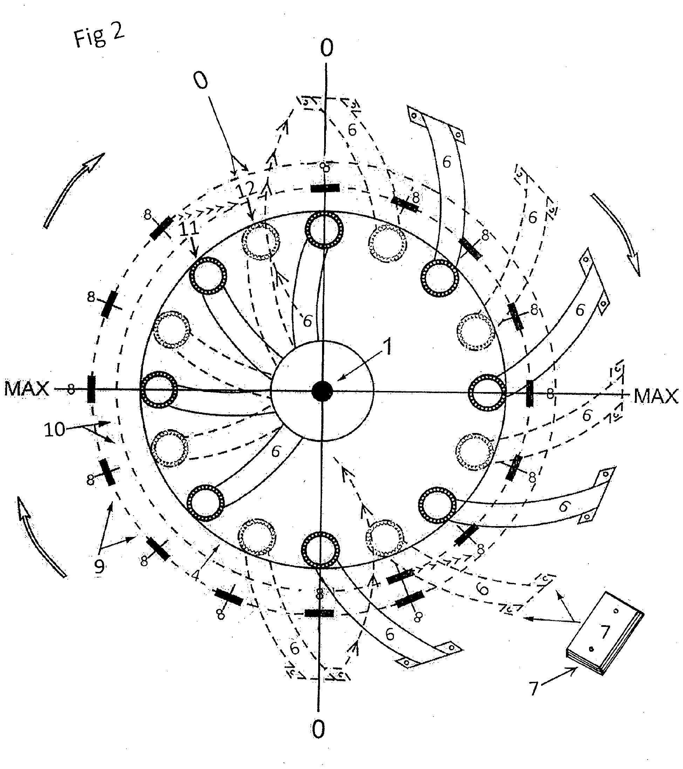

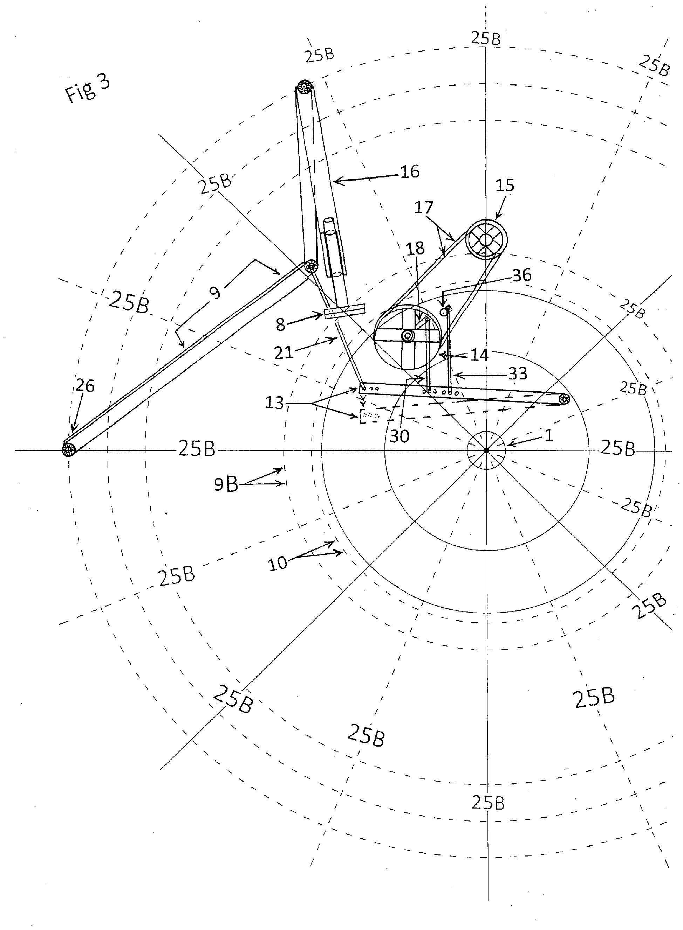

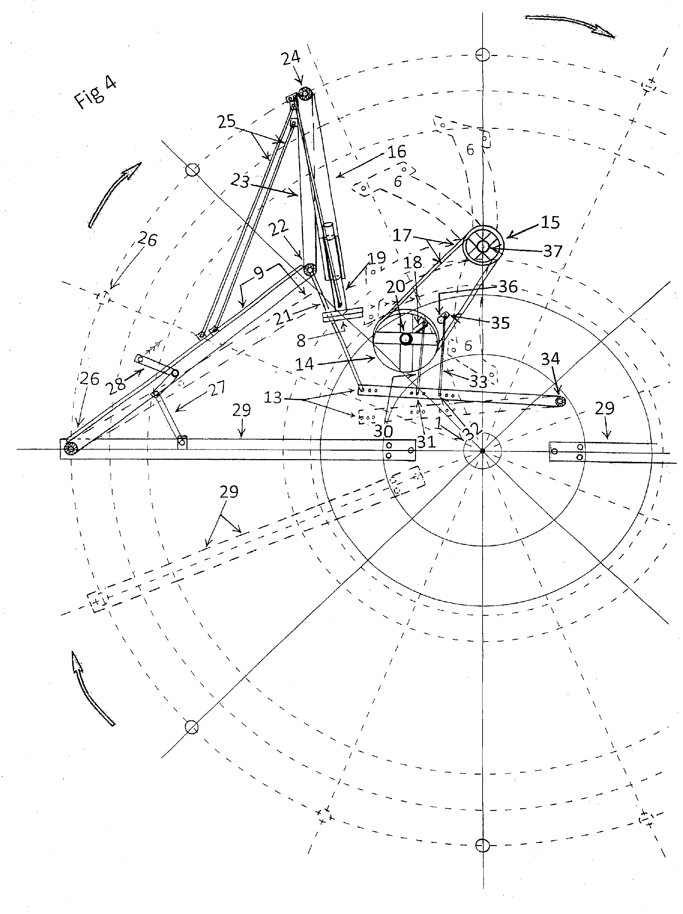

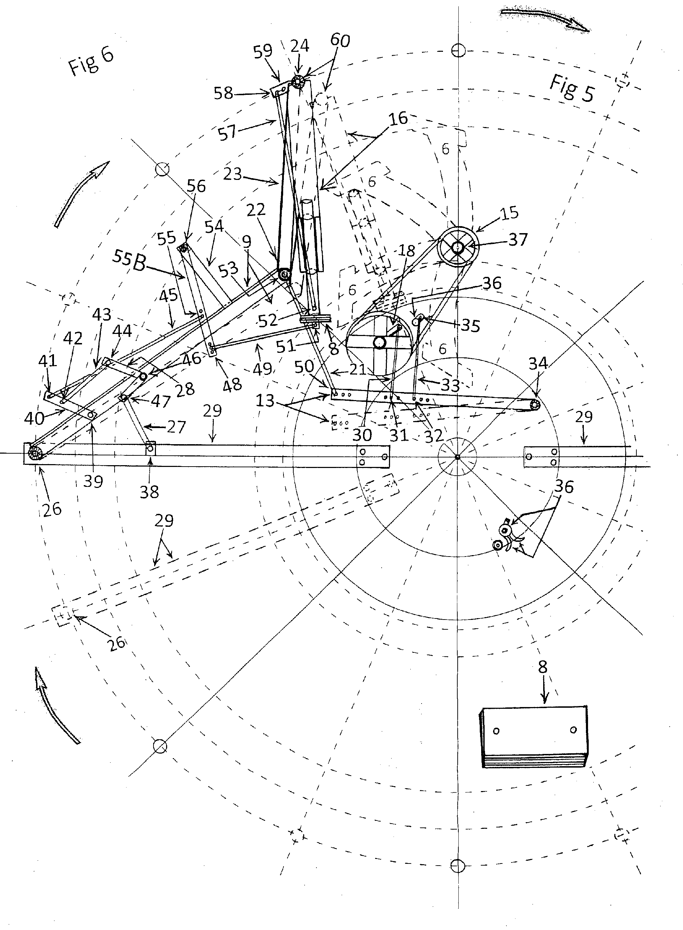

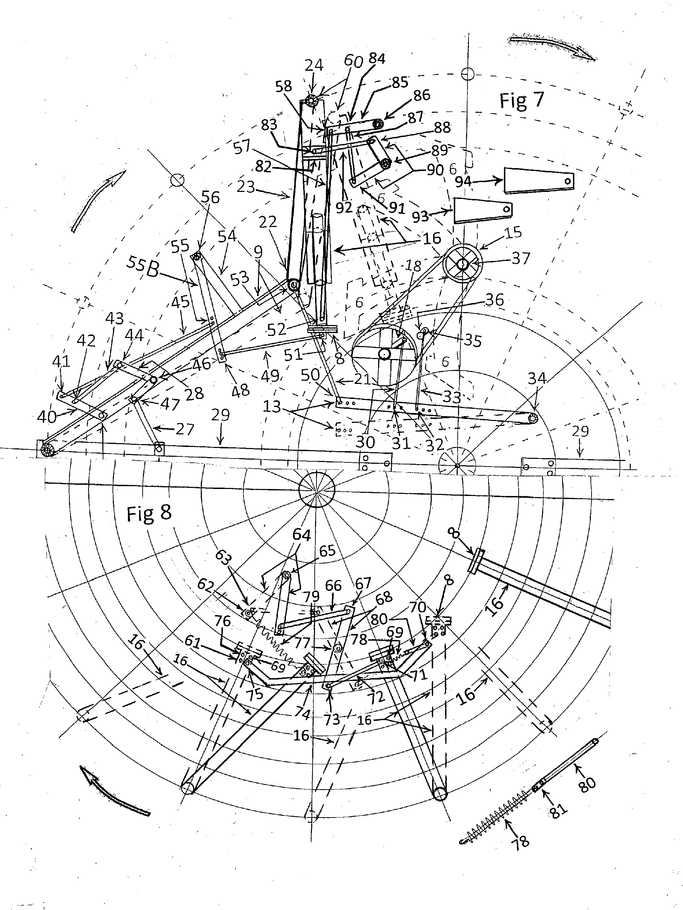

### Clarification made to the organization of the Figure (1), page 1/6:

It is a method used to fix the metallic plates on the main pivot and then a method used to fix the main and secondary arms along with their accessories on these plates.

At first, the big main plate (4) has been fixed on the main pivot in the middle. Consequently, its two plates (2) were fixed in a smaller diameter on the right of the main plate and its two plates on its left and thus, dividing the plates into sixteen parts on their peripheries in order to fix sixteen sets.

Where each set consists of:
The main arm and the secondary arm along with their accessories where eight sets are distributed on the right of the machine and eight sets on the left of the machine; they were organized in this form so that the sets shall not collide with each other first, and then, so that the weight shall be distributed evenly on the main pivot in order to protect the main pivot from bending forward.

In order to further protect the main pivot from bending forward, that is to say, to protect the invention, we connect the metallic plates with each other with round steel pivots (3A) and (4A) so that the plates and the main pivot will become one single body and therefore, protecting further the main pivot from bending forward as it is shown in Figure (1), page 1/6, and making the main pivot more capable of bearing weights.

Based upon the above mentioned, we conclude that:
The movement of the main arms lies in the opening from the top of the machine where they become distant from the main pivot of the machine and in their closure where they become close to the main pivot of the machine from the bottom of the machine, similarly to the balance of nature on earth, where the living creatures breed on the one hand and die on the other hand, thus creating the balance of nature.

The same applies to the machine/ invention; a main arm opens on the top of the machine i.e. "born" and a main arm closes at the same time on the bottom of the machine i.e. "dies", thus, maintaining the rotational balance of the machine and the continuity of its rotation.

This process is made unless a mechanical failure occurs in the machine or unless we shut down the machine.

### The functioning of the set:

The machine / invention is constituted of the main pivot (1) as shown in Figure (1). Pulleys are installed on the two edges of this pivot and are fixed on fixation centers (5) and in the middle of the main pivot, the metal plate of a large diameter (4) is fixed. Then on the right edge of the large plate, a plate of a smaller diameter (3) is fixed then the plate (2), and then, the plate no. (3) is fixed on the left edge of the main plate /large/ then the plate number (2) is fixed.

For the five plates to form one interrelated body with each other, they are fixed together using steel pivots number (3-A) and (4-A) until all the plates form together one body, this protects the main pivot from bending forward.

The main arms are installed between the plate (4) and the plate (3) while the secondary arms and their accessories are installed between the two plates (2, 3).

### Important remark:

The number of pivots (3-A) and (4-A) is specified according to the diameter of the steel plates to protect the main pivot from bending forward.

The previous set constituted of the main pivot and the metallic plates fixed on it was made in order to arrange the centers of the pulleys and the pivots carrying all the main arms and secondary pivots and their accessories. Each set is composed of a main pivot, a secondary pivot and their accessories. The number of sets in the machine is 16 sets distributed as shown in Figure (1) where we install eights sets to the left edge of the machine then eight sets to the right edge of the machine so that the sets do not collide with each other, and so that the weights are distributed equally on the main pivot which gives the main pivot a second protection and prevents it from bending forward.

According to the machine's diameter we can increase the number of the above-mentioned sets, i.e. instead of sixteen sets, their number may be either increased or decreased.

### Special principles to achieve the successful rotation of the machine/ invention

### Figure (2), Page 2/6

Figure (2) shows the location of the main arms and indicates that the machine and main arms are rotating clockwise where Figure (6) refers to the main arms which are the main force producing the rotational mechanical energy.

To achieve the location of the arms as in Figure (2) i.e. opening the arms number (6) from the top of the machine, distant them from the main pivot and closing the arms from the bottom of the machine i.e. brining them closer to the main pivot / we need an external force to assist us in this.

Another type of arms was invented and manufactured which was named the secondary arm as shown in Figure (3).

In Figure (2), during the rotation of the machine, one arm should be lifted twice, once from bottom to top where it approaches the main pivot at the bottom of the machine and a second time in the same arm, we should move it away and lift it upwards away from the main pivot from the top of the machine, and in order to solve the problem of lifting same, we brought an external force which we called the secondary arm, this way we would have solved the problem of lifting the main arm twice from the bottom and from the top in each single cycle of the machine.

The organization of the main arms (6) shall be in conformity with the explanatory Figure (2) so that the machine would rotate.

### Figure (3), page 3/6:

How does the secondary arm work to lift the main arm (6) twice in a single rotation of the machine?

The secondary arm is fixed between the two metallic plates (2) and (3) in Figure (1) and we will clarify the articulation process in Figure (3) and this, in the joint (26).

In addition, Figure (3) of the secondary arm clarifies the distribution of the weights (8) and their number amounting to sixteen on their peripheries which we named (25B).

During the rotation of the machine, the secondary arm pushes the part number (13) through the joint number (21). We named the movement transmission arm as being number (13) which constitutes a very important part in the machine rotation process.

This arm is fixed on the metallic plates (2,3).

The moment is transferred through the movement transmission joint (13) to the joint (30) where the big pulley (14) operates in order to open the main arm (6) through cables (17) and a small pulley (15).

This movement transmission arm is also responsible for the process of activating the lock (36) through the joint (33).

During the rotation of the machine, the joint (16) moves from the track (25B) to the next track (25B) and remains in this vertical position till reaching the end of its track. This is the joint position number (16) on the top of the machine. However on the bottom of the machine, the situation is completely different since the joint (16) starts its movements in a vertical position and moves counter-clockwise. The more, the machine moves clockwise, the more, the joint (16) inclines and moves from the line (25B) to the next line (25B). This inclination generates an enormous moment of the force that might destroy the machine. In case this energy was uncontrolled, this energy needs powerful suppressors in order to absorb it. However, instead of using these suppressors, we have benefited from this enormous power to assist the next secondary arm through springs one by one in this way in the right and left parts of the machine.

The use of the enormous moment of force generated from the joint (16) at the bottom of the machine in order to assist the secondary arm becomes a substitute for the use of the spring. The use of the moment of the force in assisting the secondary arm enables us to open the set prior to reaching its previous position thus this makes the upper front weaker and the bottom front stronger which generates an enormous energy for the machine.

### Remark:

Assisting the secondary arm at the bottom of the machine shall be made by installing springs.

### Figure (4), page 4/6:

A metallic joint is fixed on the pivot of the big pulley (14) on which the joint (30) is fixed and is articulated with the movement transmission number (13) in order to start up the big pulley (14).

### Figure (5), page 5/6:

An articulated joint between the base (18) and the movement transmission number (13) where it is articulated with the movement transmission in the articulation center (31).

### Figure (6), page 5/6:

The new positioning of the joint center (24) after the movement of the secondary arm towards the bottom from the track (25B) to the next track (25B) in order to open the main arm. This will happen when the lock (36) opens.

### Figure (7), page 6/6:

A mobile joint between the mobile metal joint (16) and joint (64) to pull and open the spring fixed on both ends (clockwise and counter clockwise), and a set (76) that is locked during the rotation of the machine and remains locked until it reaches the top section of the machine, it is then unlocked again and continues its cycle.

### Figure (8), page 6/6:

The recent development that we completed to the secondary arms increases the power of the machine while it rotates because when the connecting mobile metal joint (16) and the fixed metal joint connected to the secondary arm (23) are longer, the power of the machine increases during its rotation. The joint (67) moves easily and gradually lifts the load to track (9) instead of track (10) and crosses the distance from (25B) to the next (25B).

List of numbers of parts of which the machine/ invention is made, and their functions:
1. The main pivot of the machine (1)
2. A metallic plate (2) fixed on the left edge of the machine as well as on the right edge
3. A metallic plate (3) fixed on the left edge of the machine as well as on the right edge
   3A- a steel pivot connecting each of the two plates so that the metallic plates and the
   3B- a steel pivot connecting each of the two plates main pivot will become one single body.
4. A metallic plate (4) with a bigger diameter than the two plates (2, 3) fixed in the center of the machine
5. The fixation center of the pulleys of the main pivot
6. The main arm
7. The center of gravity of the main arm
8. The center of gravity of the secondary arm
9. It clarifies the external track of the centers of gravity of the secondary arm, which is the track distant from the main pivot.
10. It clarifies the internal track of the centers of gravity of the secondary arm, which is the track close to the main pivot.
11. Fixation centers of the main arms articulations in the left edge of the machine
12. Fixation centers of the main arms articulations in the right edge of the machine
13. It is a very important part being considered as a movement transmission arm from the secondary arm number (9) to the number (13) fixed on the two plates number (2) and (3) where the moment of the secondary arm is transferred through the joint number (21).
14. Big metallic pulley
15. Small metallic pulley
16. Moving metallic joint
17. Steel cables connected between the two pulleys number (14) and (15) in order to transmit the movement and to open and close the main arm.
18. A metallic joint fixed on the pivot of the big pulley number (14) on which the joint number (30) is fixed and is articulated with the movement transmission number (13) in order to start up the big pulley number (14).
19. A moving joint which is considered as a base for the centers of gravity number (8) of the secondary arm.
20. A center for the big metallic pulley number (14)
21. An articulated joint between the secondary arm number (9) and the movement transmission arm number (13).
22. An articulated center for the secondary arm located between (23) and (9) which a center fixed on the secondary arm and the functioning of this articulation is to control the joint number (16).
23. A metallic joint fixed on the secondary arm.
24. A center for the joint number (16).
25. A metallic joint in order to fix and control the joint number (24).
26. Centers for fixing the secondary arm.
27. An articulated joint between (38) and (47).
28. A joint fixed on the secondary arm which is responsible for the movement of the centers of gravity number (8) of the secondary arm.
29. A metallic joint on which the secondary arm is fixed. The metallic joint is fixed on the plates number (2, 3) at the other edge.
30. An articulated joint between the base number (18) and the movement transmission number (13) where it is articulated with the movement transmission in the articulation center number (31).
31. An articulated center located on the movement transmission number (13).
32. A joint center installed on the movement transmission number (13) of the joint number (33).
33. An articulated joint between (32) and the articulated center (35) located on the lock number (36).
34. A fixation center for the movement transmission number (13) which is fixed on the two plates number (2) and (3).
35. A joint center for the lock number (36).
36. The lock
37. A fixation center for the small pulley number (15).
38. A center for the joint number (27).
39. A joint fixation center number (40).
40. A joint.
41. A joint center on the articulation number (40).
42. A joint center on the articulation number (40).
43. An articulated joint between (42) and (44).
44. A joint center for the articulated joint number (43).
45. An articulated joint between (41) and (55)
46. A center for fixation of the articulation number (28).
47. A center for fixation of the articulated joint number (27).
48. An articulated joint fixation center number (49).
49. An articulated joint between (48) and (51) which moves the articulation of the centers of gravity (8) on the moving metallic joint number (16).
50. A joint fixation center on number (21) which moves the moment of the secondary arm number (9) to the movement transmission number (13).
51. A joint fixation center for number (49) which is responsible for the movement of the center of gravity number (8) forward and backward.
52. A joint fixation center number (57).
53. An articulated joint fixation center on the joint number (21).
54. An articulated base fixed on the secondary arm in order to fix the articulation number (55).
55. An articulated joint fixation center (45) between the two articulation (41) and (55).
56. An articulated fixation center (55).
57. An articulated joint between (52 - 58).
58. An articulated joint fixation center (57).
59. A calibrated metallic part fixed on the secondary arm in order to fix the articulated joint number (57).
60. The new positioning of the joint center number (24) after the movement of the secondary arm towards the bottom from the track (25B) to the next track (25B) in order to open the main arm. This will happen when the lock number (36) opens.
61. Position of fixation of a spring on the mobile metal joint number (16).
62. Position of fixation of a spring on joint number (64).
63. Position of fixation of the joint number (66).
64. A metal joint to move the spring back and forth
65. Position of fixation of the joint number (64)
66. A metal joint between the two joints numbers (63) and (67)
67. Position of fixation of joint number (66)
68. A mobile joint between the mobile metal joint number (16) and joint number (64) to pull and open the spring fixed on both ends (clockwise and counter clockwise)
69. Position of fixation of the short spring to pull counter clockwise.
70. Position of fixation of the cable to joint number (74)
71. Position of fixation of joint number (72)
72. A joint between number (71) and (73) to move the joint number (68) and joint number (16)
73. Position of fixation of the joint number (72)
74. A metal joint between two joints number (16) and the position of fixation of the steel cable
75. Position of fixation of joint number (74)
76. It is a set that is locked during the rotation of the machine and remains locked until it reaches the top section of the machine, it is then unlocked again and continues its cycle.
77. Position of fixation of joint number (68)
78. A short or small spring
79. A large spring
80. A steel Cable
81. A joint between a spring and a cable, which completes the distance of the cycle from (25B) to the next (25B)
82. A metal joint fixed on number (16)
83. Position of fixation of joint number (92)
84. Position of fixation of number (87)
85. A joint to fix the two joints / connections numbers (84) and (54)
86. Position of fixation of the fixed joint on joint number (23)
87. A joint between number (84) and (91)
88. Position of fixation of joint number (92)
89. Position of fixation of joint number (90)
90. A joint to move the joint number (57) and load number (8)
91. Position of fixation of joint number (87)
92. A fixed joint between the two numbers (83) and (88)
93. A base of fixation on number (23) and fixation on joint (86)
94. A base of fixation on number (23) and fixation on joint (90)

## Claims

1. A device to generate rotational mechanical energy that relies in the continuity of its rotational movement, through the secondary arm (9) and the front created through the centers of gravity of the secondary arms; where the two centers of gravity have matched on the bottom right of the machine and where a vacuum was created on the top left part of the machine, **characterized by** the fact that it consists of main arms (6);a particular weights percentage between the main arm and the secondary arm, the weights are made according to the length of the main arm, the weights of the secondary arm are always bigger than the weights of the main arm, thus enabling to invent the front allowing starting up the machine even without the main arms using only the secondary arms and consequently obtaining energy; further comprising an automatic mechanical lock (36) used to lock the main arms and their accessories and keep them steady and close to the main pivot during the starting up of the machine, on the bottom of the machine and then, the lock opening from the top of the machine during its starting up in order to release the main arm and its accessories and to keep it distant from the main pivot, where the big pulley (14) transfers the movement to the small pulley (15) through steel cables (17) and then to the main arm for its opening and closure.

2. A device to generate rotational mechanical energy according to claim 1, where in order to develop the secondary arm, the developed joint (16) was added, which during the clockwise rotation of the machine, holding the centers of gravity of the secondary arm (8),moves clockwise at a vertical level till reaching the end of its track from the track (25B) to the next track (25B); the position of the joint number (16) on the bottom of the machine being completely different since the joint (16) starts its movements counterclockwise at a vertical level; further the more the machine starts up, the more, the joint (16) inclining since it moves counterclockwise from the track (25B) to the next track (25B), this inclination generating an enormous moment of the force to benefit from in assisting the next secondary arm through springs one by one in this way in the right and left parts of the machine.

3. A device to generate rotational mechanical energy according to claims 1 and 2, using the moment of the force in assisting the secondary arm to enable opening the set prior to reaching its previous position thus making the upper front weaker and the bottom front stronger which generates an enormous energy for the machine; whereby the opening of the set prior to reaching its position means the changing of the two fronts since it makes the upper front weaker and the previous bottom front stronger increasing thus the power of the machine.
